# EUROPEAN PATENT APPLICATION

(11) **EP 3 113 467 A1**
(43) Date of publication of application: **04.01.2017**
(21) Application number: 16175220.9
(22) Date of filing: 20.06.2016
(51) Int. Cl.: H04M 3/42

(54) **COMMUNICATION SYSTEM HAVING A MOBILE PHONE AND A PRIVATE BRANCH EXCHANGE**

(30) Priority: 30.06.2015 EP 15174625
(71) Applicant: Xelion IP B.V., 2612 KK Delft (NL)
(72) Inventor: COHEN, Michael, 2585 TM Den Haag (NL)
(74) Representative: DeltaPatents B.V.

(57) **Abstract**

A communication system (100) is provided comprising a private branch exchange (PBX, 120) and a mobile phone (110). The mobile phone (110) is arranged to send an out-going call message to the private branch exchange (120) comprising a representation of the destination telephone number, and to make a first telephone call over a mobile telephone network (150) to a dedicated telephone number of the PBX. The PBX is arranged to determine that the out-going call message from the mobile phone (110) and the first telephone call are associated, to make a second telephone call from a PBX user number (#1001) to the destination telephone number (#3001) and forwarding the first and second telephone calls to each other, so that the destination telephone number (#3001) receives the second telephone call having the PBX user number (#1001) as caller-id.

## Description

### FIELD OF THE INVENTION

The invention relates to a communication system, a private branch exchange, a mobile phone, a private branch exchange method, a mobile phone method, a computer program, and a computer readable medium.

### BACKGROUND

A private branch exchange (PBX) is a telephone system within an enterprise that switches calls between enterprise users on local lines and telephone calls on one or more external phone lines. A private branch exchange is also referred to as a telephone exchange.

A PBX may be operated by an enterprise rather than the telephone company. A PBXs may use digital technology. Digital signals may be converted to analog for outside calls on POTS.

Enterprise users may have access to both a mobile phone and to the enterprise private branch exchange. The inventors have observed that the interaction between the mobile phone and the PBX is not entirely satisfactorily. Especially, with the so-called 'Bring your own device '(BYOD) the policy of permitting employees to bring personally owned mobile devices to their workplace, there is a need to better integrate mobile phone and PBX use.

### SUMMARY OF THE INVENTION

The invention is defined by the independent claims; the dependent claims define advantageous embodiments.

Using the communication system a user can make a call with a mobile phone, using the native mobile phone unit, but the telephone number that is visible through his caller-id is a PBX user number. It is preferred that a PBX number is visible to the destination instead of the mobile phone number, since this allows return calls to arrive at a location under control of the PBX, e.g., at the reception desk of the enterprise, a desktop phone or at the mobile phone as required, etc. Moreover, this avoids disclosure of private mobile telephone numbers.

In an embodiment, the mobile phone unit is arranged to display information associated with a telephone number in a mobile address book when making a call to said telephone number. The mobile control unit is arranged to obtain information associated with the destination telephone number, and to amend the mobile address book, before making the first telephone call, so that the associated information for the dedicated telephone number is said obtained information. The mobile phone unit does not call the destination number but the dedicated number, yet the user sees information that is associated with the destination number. In an embodiment, the dedicated telephone number is inserted and removed before and after the first telephone call. This avoids that a user may call the dedicated telephone number by accident without a corresponding out-going call message. In an embodiment, the information associated with the destination telephone number may be obtained from a PBX address book in the private branch exchange. For example, the PBX may respond with this information in response to receiving the out-going call message.

In an embodiment, the mobile control unit receives, from the PBX, information associated with one or more telephone numbers, which the PBX control unit retrieved from a PBX address book. The mobile control unit may be arranged to allow the user to select one of the one or more telephone numbers, the out-going call message comprising the selection, e.g., comprising the selected telephone number, or an identifier of the selected telephone number, such as an index number, etc. The mobile control unit may be arranged to amend the mobile address book with the information associated to the selected telephone number. In this case, associated information is received at the mobile phone before the out-going call message is sent.

In an embodiment, the mobile control unit receives the destination telephone number from a user, e.g., typed in via a (soft) keyboard, or selected from a mobile phone address book. In this case, the PBX control unit may send associated information to the mobile phone after receiving the out-going call message.

In an embodiment, the PBX control unit is arranged to
- receive, through the PBX phone unit, a third telephone call to the PBX user number,
- obtain from the user database the mobile telephone number associated with the PBX user number,
- determine a calling number from which the third telephone call was made from a caller-id of the third telephone call,
- obtain information associated with the calling number from a PBX address book,
- send, through the PBX data unit, an incoming call message to the mobile phone, the incoming call message comprising said obtained associated information,
- make, through the PBX phone unit, a fourth telephone call from the dedicated telephone number to the mobile telephone number. The mobile control unit is arranged to
- receive, through the mobile data unit , the incoming call message from the private branch exchange over the data connection between the mobile phone and the private branch exchange ,
- amend a mobile address book , before receiving the fourth telephone call, so that the associated information for the dedicated telephone number is said obtained information.

In this way, a call made to a PBX number may be forwarded to a mobile phone, but the user of the mobile phone sees the correct information for the incoming call. For example, an outgoing call previously made through communication system may be returned, e.g., by calling the caller id number and this call arrives at the correct location, e.g., at mobile phone.

The mobile phone and private branch exchange are electronic devices. The private branch exchange and method described herein may be applied, e.g., in a telephone exchange, e.g., an enterprise telephone exchange.

A method according to the invention may be implemented on a computer as a computer implemented method, or in dedicated hardware, or in a combination of both. Executable code for a method according to the invention may be stored on a computer program product. Examples of computer program products include memory devices, optical storage devices, integrated circuits, servers, online software, etc. Preferably, the computer program product comprises non-transitory program code means stored on a computer readable medium for performing a method according to the invention when said program product is executed on a computer.

In a preferred embodiment, the computer program comprises computer program code means adapted to perform all the steps of a method according to the invention when the computer program is run on a computer. Preferably, the computer program is embodied on a computer readable medium.

Another aspect of the invention provides a method of making the computer program available for downloading. This aspect is used when the computer program is uploaded into, e.g., Apple's App Store, Google's Play Store, or Microsoft's Windows Store, and when the computer program is available for downloading from such a store.

### BRIEF DESCRIPTION OF THE DRAWINGS

Further details, aspects, and embodiments of the invention will be described, by way of example only, with reference to the drawings. Elements in the figures are illustrated for simplicity and clarity and have not necessarily been drawn to scale. In the Figures, elements which correspond to elements already described may have the same reference numerals. In the drawings,
Figure 1 schematically shows an example of an embodiment of a communication system 100,
Figure 2a schematically shows an example of an embodiment of a user database,
Figure 2b schematically shows an example of an embodiment of a PBX address book,
Figure 2c schematically shows an example of an embodiment of a mobile address book,
Figure 3a schematically shows an example of an embodiment of a mobile phone,
Figure 3b schematically shows an example of an embodiment of a PBX,
Figure 4a schematically shows an example of an embodiment of a communication system,
Figure 4b schematically shows an example of an embodiment of a communication system,
Figure 5 schematically shows an example of an embodiment of a first communication method,
Figure 6 schematically shows an example of an embodiment of a second communication method,
Figure 7a schematically shows a computer readable medium having a writable part comprising a computer program according to an embodiment,
Figure 7b schematically shows a representation of a processor system according to an embodiment.

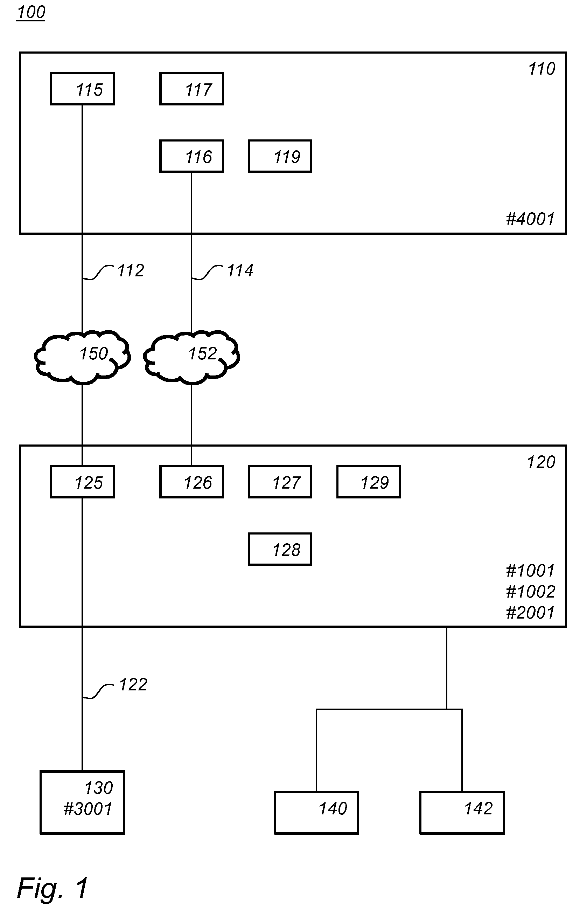

### List of Reference Numerals in figures 1-3b:

100 a communication system
110 a mobile phone
112 a telephone connection between the dedicated telephone number #2001 and the mobile telephone number #4001
114 a data connection
115 a mobile phone unit
116 a mobile data unit
117 a mobile address book
119 a mobile control unit
120 a private branch exchange (PBX)
122 a telephone connection between an PBX telephone number #1001 and a destination telephone number #3001
125 a PBX phone unit
126 a PBX data unit
127 a PBX address book
128 a user database
129 a PBX control unit
130 an external phone
140, 142 a telephone
150 a mobile telephone network
152 a data network
301 a mobile phone
320 a PBX
332 a telephone
340 a telephone
350 a public switched telephone network (PSTN)
352 a gateway
360 internet
370 a LAN
#1001, #1002 a PBX telephone number
#2001 a dedicated telephone number
#3001 a destination telephone number
#4001 a mobile telephone number

### DETAILED DESCRIPTION OF PREFERRED EMBODIMENTS

While this invention is susceptible of embodiment in many different forms, there are shown in the drawings and will herein be described in detail one or more specific embodiments, with the understanding that the present disclosure is to be considered as exemplary of the principles of the invention and not intended to limit the invention to the specific embodiments shown and described.

In the following, for the sake of understanding, elements of embodiments are described in operation. However, it will be apparent that the respective elements are arranged to perform the functions being described as performed by them.

Figure 1 schematically shows an example of an embodiment of a communication system 100.

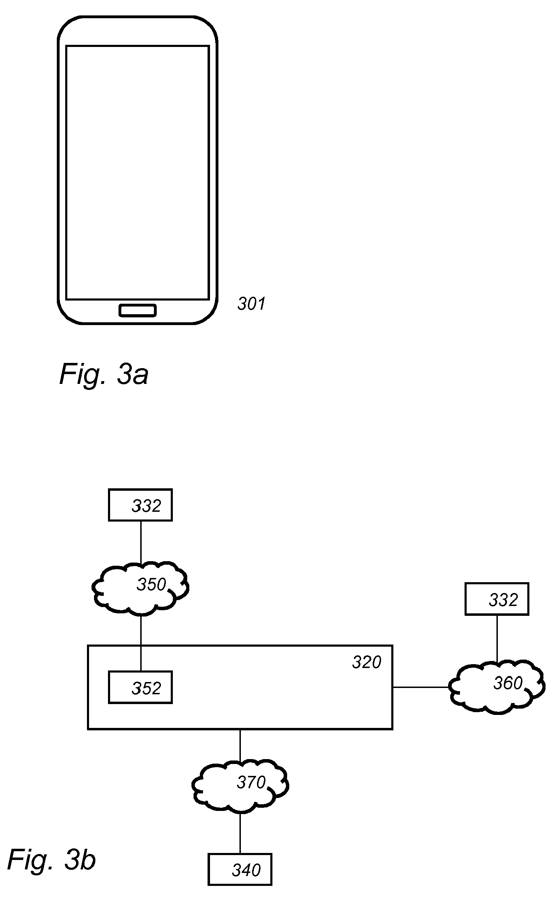

Communication system 100 comprises a private branch exchange 120 and a mobile phone 110. 'Private branch exchange' will be abbreviated as PBX. Figure 3b shows a possible architecture of a private branch exchange which may be used for PBX 120. Mobile phone 110 has telephone number #4001.

Figure 1 shows phones 140 and 142 which make and receive calls through PBX 120. Figure 1 also shows an external phone 130. External phone 130 may be reached with the telephone number #3001. So PBX 120 may route a call that PBX 120 receives for number #1001 and #1002 to telephones 140 and 142. Telephone 140 and 142 may be desktop telephones, but this is not necessary.

A user of mobile phone 110 could use a mobile phone unit 115 of mobile phone 110 to directly call, say, external phone 130 on its number #3001. This has the result that a direct telephone connection is established between the mobile phone 110 and phone 130. However, the user of external phone 130 could see the mobile phone number of mobile phone 110, in this case, #4001. In some cases this is undesirable. For example, if a user makes a business call to a client on a private mobile phone, the client will obtain the private mobile telephone number. To protect the boundaries between business and private life this may be undesirable. Furthermore, a return call from the client will arrive directly at the mobile phone without an opportunity for PBX 120 to reroute the call, say, to a helpdesk, etc. The matter is further complicated, in that in many countries it is illegal to attach a different caller id to a phone call than the number from which the call was made.

Some solutions to this problem are unsatisfactory. For example, blocking the caller id would avoid that phone 130 obtains the mobile phone number #4001, but instead he has no number at all. Thus name look-up software at the destination phone for looking up the telephone number from an address book will not work. The user of phone 130 can also not call back.

Alternatively, mobile phone 110 may avoid mobile phone unit 110 and make a voice over IP call over a mobile data unit 116 instead. This can also avoid that the mobile telephone number of mobile phone 110 is visible to phone 130. However, performing voice calls over a data unit, e.g., 4G, or Wi-Fi, has a number of disadvantages: the required data connection is not always available, roaming problems may occur and the priority of standard mobile calls (like GSM) over data network calls (like VoIP) prevents having calls such as they are experienced from making the normal mobile phone calls.

Communication system 100 offers the mobile phone user the facility to make and receive calls using native mobile phone unit 115, while the receiver of the call does not see the mobile phone number. Instead the receiver of the call sees another number. Moreover the user can receive calls to this other number as if they were made to his mobile phone. Moreover, calls made through communication system 100 use the native mobile phone unit, using the native phone call quality.

PBX 120 comprises a PBX phone unit 125. PBX phone unit 125 is configured for multiple PBX phone numbers; PBX phone unit 125 is arranged to make telephone calls from multiple PBX telephone numbers and to receive telephone calls to the multiple PBX telephone numbers. The PBX phone numbers are phone numbers through which the PBX 120 can be reached; PBX 120 can place outgoing telephone calls from any of the PBX phone numbers. In the latter case, the PBX phone number is used as the Caller ID (caller identification, CID) of the outgoing call. For example, one or more of the multiple PBX phone numbers may be fixed line numbers. Note that in a modern PBX, multiple telephone calls may be received at a single dedicated number.

For example, the set of PBX phone numbers may include the numbers #1001 and #1002. (In this document, example telephone numbers are represented as a hash tag followed by four digits to distinguish them from reference numbers. In embodiments, the PBX phone numbers may be chosen to be compatible with external phone system requirements.) For example, PBX 120 may route a first set of PBX phone numbers to telephones.

For example, if external phone 130 calls a PBX number, say the number #1001, the call will first arrive at PBX 120 who may then route the call to phone 140. As is usual in a PBX, the routing may be dynamic, e.g., sometimes forwarding a call for #1001 to mobile phone 110 instead, as is desired, e.g., depending on the time of day, etc. We will assume that mobile phone 110 and telephone 140 are associated with the same user. The latter is not necessary for the system to work but it is a typical use case. The user of the mobile phone will be identified with a user identifier.

In addition to phone unit 125, PBX 120 also comprises a PBX data unit 126 that is arranged to send and receive digital messages over a data network 152. The data network 152 may be GPRS or 4G, etc.

Mobile phone 110 comprises a mobile phone unit 115 and a mobile data unit 116. Mobile phone unit 115 is arranged for a mobile telephone network 150, and arranged to make telephone calls from a mobile telephone number #4001 and to receive telephone calls to the mobile telephone number #4001. In particular, mobile phone can call PBX 120 from its own number #4001; in this case, the phone call would have the mobile phone number #4001 as caller id. Mobile phone network 150 may for example be GSM or Voice over LTE (VoLTE). For example, the mobile phone number may be assigned to mobile phone 110 by a carrier.

The mobile data unit 116 is arranged to send and receive digital messages over the data network 152. In particular, mobile data unit 116 and PBX data unit 126 can send and receive message to and from each other. Mobile phone 110 and PBX 120 establish a data connection 114 between them.

In an embodiment, mobile data unit 116 and PBX data unit 126 are arranged to establish an authenticated channel between mobile phone 110 and PBX 120. Such an authenticated channel allows digital messages sent from the mobile phone to the private branch exchange, through the mobile data unit, to be securely associated with a user identifier of a user of mobile phone 110. For example, mobile phone 110 and PBX 120 may perform the TLS 1.2 protocol to authenticate, and optionally, also encrypt their communications.

In an embodiment, the authentication of the user over the mobile telephone network by PBX120 may be on the basis of the telephone number. Authentication over the data network may be on the basis of username and password with which the mobile phone logged into the PBX. The communication over the data network may use http and SSL. PBX 120 may comprise a login unit (not separately shown) for receiving one or more log-in message from mobile phone 110.

In an embodiment, the out-going call message comprises the user identifier. In an embodiment, mobile control unit 119 is arranged to register with PBX control unit 129, e.g., using login procedure. The latter may involve a password in addition to a user id.

Mobile phone 110 may be of the type known as a smart phone. For example, figure 3a shows a possible mobile phone 301 that may be used for mobile phone 110. Mobile phone 301 uses a touch screen, other interfaces are possible, e.g., a keyboard.

PBX 120 comprises a user database 128 associating with each other: a user identifier, a mobile telephone number #4001 and a PBX user number #1001 of the multiple PBX telephone numbers. Using user database 128 PBX control unit 129 may determine that a call for a user with the user identifier may be forwarded to the mobile phone with number #4001 or to the telephone with number #1001, etc.

In an embodiment, an out-going call message indicates that a user wants to call a particular destination number. PBX 120 may be arranged to keep the out-going call message for a retaining period. For example the retaining period may be 30 seconds. If no call is received at a dedicated number within the retaining period, the out-going call message is deleted.

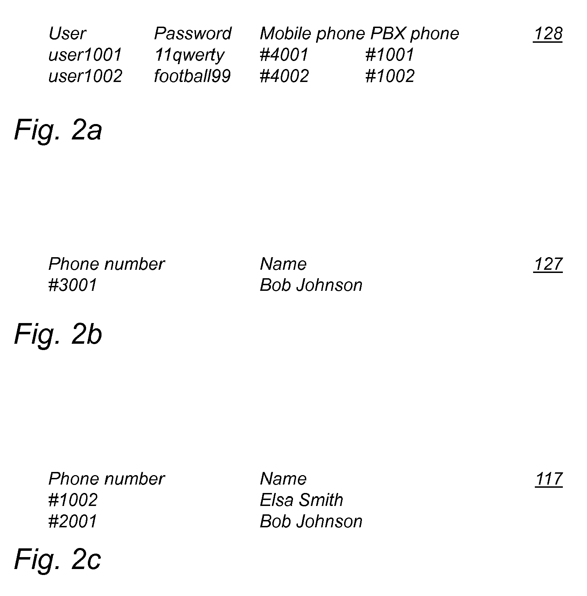

Figure 2a shows an example of user database 128. Figure 2a shows a database, here in the form of a table, in which a user identifier, a mobile phone number, and a PBX phone number are associated. For example, the user of mobile phone 110 may have user identifier 'user1001', mobile phone number #4001 and PBX phone #1001. Thus if PBX 120 is called under number #1001, it may use user database 128 to route the call to mobile phone number #4001, so that the call arrives at mobile phone 110. PBX 120 may have rules for when to forward a call to a mobile phone, as is known in the art. The rules may be included in user database 128. The user identifier may be the same as the mobile phone number.

User database 128 may, optionally, also associate a user password, in this case '11qwerty' with the user identifier. The user password may be used to set up the authenticated channel between mobile phone 110 and PBX 120. A database, such as the user database, may be distributed over multiple tables, or sub-databases. Instead of a password, also a different cryptographic token may be used, e.g., a public-private key pair, e.g., an RSA public-private key pair; or a symmetric key, etc.

Returning to figure 1, PBX 120 comprises a PBX control unit 129; mobile phone 110 comprises a mobile control unit 119. A control unit may be in the form of a processor and a memory with software executed by the processor. The control unit on mobile phone 110 may be implemented in the form of a so-called app.

At least one of the multiple PBX telephone numbers is used to forward calls to and from mobile phones, e.g., mobile phone 110 as described herein. Such numbers are called dedicated telephone numbers. An incoming call at a dedicated telephone number is recognized by PBX control unit 129 as such. In this example, PBX 120 uses dedicated telephone number #2001. PBX 120 uses at least one dedicated number, but may also use more than one.

Mobile control unit 119 has access to the user identifier associated with the user of the mobile phone, in this example user1001, and dedicated telephone number #2001 of the private branch exchange. If mobile phone 110 and PBX 120 use an authenticated channel, e.g., as set up by their respective control units, over their respective data channels, then mobile control unit 119 may also use a cryptographic token such as a password.

PBX control unit 129 and mobile control unit 119 are arranged so that mobile phone 110 can make a call to external phone 130 having as caller id the PBX user number #1001. Below a scenario is given how this may be accomplished by mobile phone 110 and PBX 120. The steps are ordered in a possible chronological order.

Mobile control unit 119 is arranged to receive, from the user of the mobile phone 110, a request to call the destination telephone number #3001. For example, the user may interact through an interface of mobile phone 110, say a touch screen, to select a contact with number #3001. For example, the user may enter the number #3001 directly. In an embodiment, PBX 120 comprises a PBX address book 127 that comprises telephone numbers and associated information. Mobile control unit 119 may be arranged so that the user can select the destination telephone number #3001 from PBX address book 127, e.g., over the authenticated channel.

Figure 2b shows an example of a PBX address book 127, e.g., implemented as a database, e.g., a table. For example, the user of mobile phone may access address book 127 over data connection 114 and select in address book 127 a contact, e.g., Bob Johnson. Mobile phone 110 may further obtain the destination phone number #3001 for Bob Johnson. Mobile phone 110 may also obtain the destination telephone number from a different source, e.g., a mobile address book 117, a web site, etc.

PBX address book 127 may have more resources, e.g., larger storage resources than mobile address book 117. Moreover, PBX address book 127 is typically maintained by more users than mobile address book 117. As a result PBX address book 127 is often considerably larger, and more up to date than address book 117.

Mobile control unit 119 is arranged to send, through the mobile data unit 116, an out-going call message to the private branch exchange 120 over the data connection 114 between the mobile phone and the private branch exchange, the out-going call message being associated with the user identifier and comprising a representation of the destination telephone number. In this example, the out-going call message could contain the number #3001. The out-going call message may also contain the user identifier so that the out-going call message is associated with the user identifier. In this case the out-going call message may comprise { out-going, user1001, #3001}; the identifier 'out-going' identifies the message as an out-going call message. Associating a message with the user identifier may also be done through the authenticated channel.

The out-going call message may comprise a representation of the destination telephone number by comprising the destination telephone number itself, e.g., an encoding of the destination telephone number. In an embodiment, the destination telephone number is represented as an index in a PBX address book.

Control unit 129 is arranged to receive, through PBX data unit 126, the out-going call message from mobile phone 110 over data connection 114 between the mobile phone 110 and the private branch exchange 120. Control unit 129 identifies the out-going call message as coming from the user identifier, e.g., by obtaining the user identifier from the message or via the authenticated channel, and obtains the destination telephone number #3001.

Mobile control unit 119 is arranged to make, through the mobile phone unit, a first telephone call over the mobile telephone network 150 to the dedicated telephone number #2001. How critical the timing is between sending the out-going call message and the making the telephone call depends, e.g., on the type of mobile telephone network 150. For, e.g., a GSM network connecting the call takes a relatively long time. In this case, the out-going call message may even be sent after placing the call. In case the mobile telephone network 150 is fast, e.g., VoLTE, some time must be allowed between sending the out-going call message and placing the call. In an embodiment, PBX control unit 129 is arranged to send a confirmation message to the mobile control unit indicating that the out-going call message has been received; the mobile control unit is arranged to place the call to the dedicated telephone number after receiving the confirmation message. In an embodiment, the confirmation message comprises the information associated with the destination telephone number in the PBX address book. The mobile phone may use this information to amend information for the dedicated telephone number in the mobile address book 117 (see further below).

Control unit 129 is arranged to receive, through PBX phone unit 125, the first telephone call to the dedicated telephone number #2001 over a mobile telephone network 150 from the mobile telephone number #4001. PBX 120 may obtain the mobile telephone number #4001 from the caller id of the first telephone call.

Control unit 129 is arranged to determine that the out-going call message from the mobile phone 110 and the first telephone call are associated by finding in the user database 128 the user identifier and the mobile telephone number #4001 and obtaining from the database the associated PBX user number #1001.

In an embodiment, PBX 120 may receive multiple out-going call messages and multiple first telephone calls. For example, control unit 129 may obtain the user identifier (e.g. user1001) from an out-going call message of the multiple out-going call messages, identify from user database 128 the associated mobile telephone number, in this case, mobile phone number #4001. Control unit 129 may then identify the first telephone call of the multiple first telephone calls, which is received from that mobile phone number, e.g. #4001. Alternatively, PBX control unit 129 may obtain the mobile telephone number #4001 from a first telephone call and find the corresponding user identifier in the user database. Using the user identifier the corresponding out-going call message is found. In both cases, control unit 129 identifies the correct destination telephone number for the incoming first telephone call.

In an embodiment, PBX control unit 129 discard a received out-going call message if a corresponding telephone call is not received on the dedicated number within a time period.

In an embodiment, PBX control unit 129 maintains a first list of pending first telephone calls for which no corresponding out-going call message has been identified and a second list of out-going call messages for which no first telephone call has been identified. PBX control unit periodically matches the first and second list with each other by finding a first telephone call from the first list corresponding to an out-going call message on the second list; after which both may be removed from the first and second list. In an embodiment, out-going call messages are received before receiving the first telephone call, so that the first list will typically contain only one telephone call. The first list may be further maintained by removing terminated calls; the second list by removing out-going call messages after a time-out period.

Control unit 129 is arranged to make, through the PBX phone unit, a second telephone call from the PBX user number #1001 to the destination telephone number #3001 and forwarding the first and second telephone calls to each other, so that the destination telephone number #3001 receives the second telephone call having the PBX user number #1001 as caller-id. Thus the user made a call from a mobile phone, to a selected destination telephone number and is correctly connected to that number, yet the caller id of this call is now (legally) a PBX number that is associated with the same user.

Furthermore, the call may be returned to the number #1001, e.g., from the caller id, by phone 130. In case of a return call, e.g., a third telephone call, to the PBX user number #1001, PBX control unit 129 finds from the user database the mobile telephone number #4001 associated with the PBX user number #1001, and makes, through the PBX phone unit, a fourth telephone call from the dedicated telephone number #2001 to the mobile telephone number #4001. Instead, of routing the incoming call to the mobile phone, the call may also be routed to a different phone, e.g., telephone 140 or to both at the same time, etc. For example, the routing may be to mobile phone 110 on some days of the week and to phone 140 on others, etc.

In an embodiment, the mobile phone comprises a mobile address book 117 comprising telephone numbers and associated information. An example of mobile address book 117 is shown in figure 2c. In figure 2c a phone number, in this case the PBX number #1002 is associated with the information 'Elsa Smith'. (Mobile address book 117 may also contain non-PBX numbers). Mobile phone unit 115 is arranged to display information associated with a telephone number in the mobile address book when making a call to said telephone number. For example, if a user of mobile phone 110 makes a call to #1002, the information associated in address book 117 to said number is displayed by mobile phone unit 115, e.g., on a display of mobile phone 110, e.g., on a touch screen of mobile phone 110. Information associated with a number in an address book, such as books 117 and 127, may include information such as a name, a picture, and other associated information, e.g., last contact, company, etc.

After the user selected requested a call to destination telephone number #3001, e.g., by selecting the corresponding contact in an (PBX) address book. Mobile control unit 119 is arranged to
- obtain information associated with the destination telephone number #3001, and
- amend the mobile address book, before making the first telephone call, so that the associated information for dedicated telephone number #2001 is said obtained information.

The effect is that when mobile phone unit 115 makes the call to dedicated telephone number #2001, the mobile phone unit 115 will use the information listed in mobile address book 117 as associated with the dedicated telephone number. In this case, steps have been taken so that this information is the correct associated information that was previously obtained.

The information may also be obtained from the mobile address book 117 locally. For example, the address book may already contain the number #3001 and associated information. In this case, mobile address book 117 may be amended by copying or moving the associated information from number #3001 to dedicated telephone number #2001.

Alternatively, or in addition, mobile control unit 119 may obtain the destination number and associated information from PBX address book 129. In an embodiment, the mobile control unit is arranged to obtain the information associated with the destination telephone number #3001 through the data network from a PBX address book 127 comprising telephone numbers and associated information in the private branch exchange. For example, mobile control unit 119 may be arranged to receive a search request, e.g., a full or partial name from the user, e.g., via an interface of mobile phone, send the search request to PBX 120. PBX control unit 129 may respond by sending one or more matches from address book 127 satisfying the search request to mobile phone 110. Finally, a user of mobile phone 110 may select one of the matches, e.g., by selecting a name, or photo, etc, thereby requesting the corresponding destination phone number.

The dedicated number used by mobile phone 110 for out-going calls may be, but does not have to be, the same as the dedicated number used by PBX 120 incoming calls.

Figure 2c shows address book 117 after it was amended. Information for destination number #3001 was obtained from, say, address book 127 and inserted in address book 117 for the dedicated telephone number #2001. When the call to #2001 is made through the native phone unit 115 of mobile phone 110, the inserted information will be displayed.

In an embodiment, the mobile control unit is arranged to insert the dedicated telephone number and associated information into mobile address book 117 before making the first telephone call, and to remove the dedicated telephone number and associated information from mobile address book 117 after the first call terminated. In this case, the dedicated telephone number does not remain in mobile address book 117. This reduces the chance that a user could accidently call dedicated telephone number #2001, without a sending an out-going call message.

In an embodiment, PBX 120 comprises a recorded message, and PBX control unit 129 is arranged to play the recorded message to mobile phone 110 if out-going call message cannot be found for a call arriving at PBX 120 at the dedicated telephone number. For example, in case that the dedicated phone number is called without a previously sent out-going call message, the recorded message could instruct the user to contact a support desk, etc.

In an embodiment, the mobile phone unit 115 records the first phone call from the mobile phone unit 115 to the PBX phone unit 125 using the dedicated phone number, e.g., when the first call has ended. However, mobile control unit 119 may arranged to delete the call detail record after the first call has ended. In this way, there is no history in the mobile phone unit 115 of a call to the PBX phone unit 125

The address book may also be used in case of a return call. For example, PBX control unit 129 may be arranged to
- receive, through the PBX phone unit, a third telephone call to the PBX user number #1001. For example, a call may be made from phone 130 to telephone number #1001. For example, the user of phone 130 may make a return call to the telephone number that said user obtained from the caller id after he/she was called from telephone 140, or as described above from mobile phone 110.

In an embodiment, PBX control unit 129 is arranged
- determine a calling number from which the third telephone call was made from a caller-id of the third telephone call, and
- obtain information associated with the calling number from the PBX address book 127.

For example, PBX control unit 129 may be arranged to obtain from the user database the mobile telephone number #4001 associated with the PBX user number #1001. PBX unit 129 may obtain the PBX number #1001, from the caller id of the third telephone call. For example, figure 2a, which shows an example user database. The example user database shows that from a given PBX user number, say #1001, the associated mobile phone number #4001 may be obtained.

Finally, PBX control unit 129 is arranged to send, through the PBX data unit, an incoming call message to the mobile phone, the incoming call message comprising the said obtained associated information.

The incoming-call message may also comprise the dedicated telephone number that PBX 120 will use to place the fourth telephone call. The latter is especially useful, in case PBX 120 uses multiple dedicated telephone numbers. The out-going call message may be authenticated, so that mobile phone 110 may verify that the message really originated from PBX 120.

In the embodiment, the PBX control unit 129 is arranged to make, through the PBX phone unit, a fourth telephone call from the dedicated telephone number #2001 to the mobile telephone number #4001.

Mobile control unit 119 is arranged to
- receive, through the mobile data unit (116), the incoming call message from the private branch exchange (120) over the data connection (114) between the mobile phone (110) and the private branch exchange (120),
- amend the mobile address book (117), before receiving the fourth telephone call, so that the associated information for the dedicated telephone number is said obtained information.

The effect is that a telephone call is received on mobile phone 110 from the dedicated telephone number #2001, yet the information displayed is associated with the caller who initiated the call; in this case the user of phone 130.

The out-going message may comprise the number #3001 from which PBX 120 received the call. Mobile phone control unit 119 may be arranged to add number #3001 from which PBX 120 received the call to the mobile address book 117 together with the associated information.

If a second third telephone call is received which should be redirected to the same mobile phone number, before the fourth telephone call terminated, the second third telephone call may be forwarded to a redirect service, e.g., a voice box.

As with outgoing calls a confirmation message may be used to confirm that the incoming call message has been received by mobile phone 110 and/or the mobile address book 117 has been amended before making the fourth telephone call. For example, in an embodiment the mobile control unit 119 is arranged to send the confirmation message, through the mobile data unit, after amending the mobile address book and the PBX control unit is arranged to receive a confirmation message, through the PBX data unit, after sending the incoming call message to the mobile phone and before making the fourth telephone call. Confirmation messages avoid the situation in which the fourth telephone connection connects to mobile phone 110 before mobile address book 117 is amended. For example, this may be used in a particular fast network like VoLTE. In slower networks, confirmation messages may be omitted; the fourth telephone call may even be made before the outgoing-call message is sent.

In an embodiment, PBX control unit 129 waits for a time-out period for the confirmation message. If the confirmation message is not received in the time-out period, the fourth telephone call is made.

Confirmation messages are less critical for outgoing calls, as the PBX control unit 129 may be configured to wait for the out-going call message for some time after receiving the first telephone call. If the out-going call message is not received within a time period of receiving the first telephone call, the first telephone call may be terminated, or the first telephone call may be accepted, e.g., answered, and a message may be played to the user. However, in case of an incoming telephone call, this is different; if the fourth telephone call arrives at mobile phone 110 before mobile address book 117 was updated, the correct associated information may not be shown.

If the fourth telephone call is not answered by mobile phone 110, within some time period the fourth call may be routed to a voice box, say by a carrier of mobile phone 110. Unfortunately, in this case a business call coming via the business number #1001 now arrives in the private voice box of number #4001. To avoid this, in an embodiment, the PBX control unit is arranged to determine that mobile phone 110 cannot be reached and thereupon forward the third telephone call to a redirection facility of the PBX, e.g., a voice box of the PBX user number (#1001) or to a fallback number, say a receptionist, etc. It may be determined that mobile phone 110 cannot be reached if the fourth telephone call is not answered by the mobile phone (110) within a time period.

Unfortunately, it is hard to estimate the time between making the fourth telephone call and the moment the call will be forwarded to a private voice box, say of a carrier of mobile phone 110 routing the fourth telephone call to a voice box. Moreover, this time period may vary between different carriers. Some improvement may be obtained by forwarding the fourth telephone call to the redirection facility in dependence on the moment the call arrives at mobile phone 110. In an embodiment, mobile control unit 119 is arranged to send a call-received message, through mobile data unit 116, to PBX 120 when the fourth telephone call is received at mobile phone unit 115. PBX control unit 129 is arranged to terminate the fourth telephone call if the fourth telephone call is not answered by the mobile phone 110 within a time period, the time period starting upon receiving the call-received message at PBX 120, and forward the third telephone call to the redirection facility.

In an embodiment, the mobile control unit is arranged to send, through the mobile data unit 116, availability information about the mobile phone unit 115 to PBX 120. PBX 120 may use this information, e.g., to route a call for the user, e.g. the fourth telephone call, to a different destination if the availability information indicates that mobile phone unit 115 is not available, say to a redirection facility such as voice box and to route the call to the mobile phone otherwise. This also ameliorates problem of estimating the moment the call will be forwarded to a private voice box. For example, mobile phone unit 119 may be arranged to send availability information, say in the form of an availability information message to the PBX control unit over the data network, if mobile phone unit 115 is engaged, e.g., with a different call over the mobile phone network.

The communication system described herein allows the use of a private mobile phone for business purposes without revealing the private mobile telephone number to business contacts. Nevertheless, the cost of calling through the private telephone call will be charged to the user. Since, in communication system 100, business calls are routed through a private branch exchange, the system allows solving with technical means the problem of obtaining reliable duration records indicating the time business call were made to and/or from a private mobile telephone. In an embodiment, the PBX control unit is arranged to log the duration of the first and/or fourth telephone call.

An advantageous communication system is provided in the following clause:
A communication system (100) comprising a private branch exchange (PBX, 120) and a mobile phone (110),
the private branch exchange (120) comprising,
   - a PBX phone unit (125) arranged to make telephone calls from multiple PBX telephone numbers (#1001, #1002) and to receive telephone calls to the multiple PBX telephone numbers, at least one of the multiple PBX telephone numbers being a dedicated telephone number (#2001),
   - a PBX data unit (126) arranged to send and receive digital messages over a data network (152)
   - a PBX address book (127) comprising telephone numbers and associated information,
   - a user database (128) associating with each other: a user identifier, a mobile telephone number (#4001) and a PBX user number (#1001) of the multiple PBX telephone numbers,
   - a PBX control unit (129) arranged to
   - receive, through the PBX phone unit, a third telephone call to the PBX user number (#1001),
   - obtain from the user database the mobile telephone number (#4001) associated with the PBX user number (#1001),
   - determine a calling number from which the third telephone call was made from a caller-id of the third telephone call,
   - obtain information associated with the calling number from the PBX address book (127),
   - send, through the PBX data unit, an incoming call message to the mobile phone, the incoming call message comprising said obtained associated information,
   - make, through the PBX phone unit, a fourth telephone call from the dedicated telephone number (#2001) to the mobile telephone number (#4001),
the mobile phone (110) comprising
   - a mobile phone unit (115) arranged for a mobile telephone network (150), and arranged to make telephone calls from the mobile telephone number (#4001) and to receive telephone calls to the mobile telephone number (#4001),
   - a mobile data unit (116) arranged to send and receive digital messages over the data network (152),
   - a mobile address book (117) comprising telephone numbers and associated information, the mobile phone unit being arranged to display information associated with a telephone number in the mobile address book when making a call to said telephone number,
   - a mobile control unit arranged to
   - receive, through the mobile data unit (116), the incoming call message from the private branch exchange (120) over the data connection (114) between the mobile phone (110) and the private branch exchange (120),
   - amend the mobile address book (117), before receiving the fourth telephone call, so that the associated information for the dedicated telephone number is said obtained information.

In an embodiment, the mobile control unit is arranged to send, through the mobile data unit (116), availability information about the mobile phone unit (115) to PBX 120. PBX 120 may use this information, e.g., to route an call for the user to a different destination if the availability information indicates that mobile phone unit (115) is not available.

In an embodiment, the mobile control unit is arranged to delete form a call history of mobile phone unit 115 the call detail records of first and fourth telephone calls.

Typically, the devices 110 and the 120 each comprise a microprocessor (not shown) which executes appropriate software stored at the device 110 and the 120; for example, that software may have been downloaded and/or stored in a corresponding memory, e.g., a volatile memory such as RAM or a non-volatile memory such as Flash (not shown). In particular, the control unit 119 and 129 may be implemented by said microprocessor and software. Alternatively, the control unit may be, in whole or in part, be implemented in programmable logic, e.g., as field-programmable gate array (FPGA). The control unit 119 and 129 may be implemented, in whole or in part, as a so-called application-specific integrated circuit (ASIC), i.e. an integrated circuit (IC) customized for their particular use.

In an embodiment, mobile phone 110 comprises a mobile phone circuit, a mobile data circuit, a mobile control circuit. In an embodiment, PBX 120 comprises a PBX phone circuit, a PBX data circuit, a PBX control circuit. The circuits implement the corresponding units described herein. The circuits may be a processor circuit and storage circuit, the processor circuit executing instructions represented electronically in the storage circuits. The circuits may also be FPGA, ASIC or the like. The mobile address book, PBX address book and user database, etc, may be implemented in a storage device, e.g., a memory, a hard disk, cloud storage, etc.

Figure 3a schematically shows an example of an embodiment of a mobile phone 301. Mobile phone 301 may be a so-called smart phone. In this example, a user of the smart phone can interact with the mobile phone 301 through a touch screen. In an embodiment, mobile phone 301 initially comprises a mobile phone unit and mobile data unit as described above, but is only later configured for communication system 100 by installing mobile control unit 119. For example, software for mobile control unit 119 may be downloaded to mobile phone 119, e.g., in the form of a so-called app, e.g., downloaded from an app store. Interestingly, the app may present itself as a 'phone in a phone', nevertheless, both outgoing and incoming calls are made through the native mobile phone unit. Thus phone calls made through communication system 100 have the same call quality as phone calls made through the native phone abilities present in phone 301 before the mobile control unit 119 was installed.

Communication system 100 provides a number of advantages over alternative ways to connect a mobile phone call through a private branch exchange.

For example, an alternative technology may use call back technology. In this alternative to communication system 100, a call is set up by asking the PBX over a data channel to set up a call to a destination. After receiving the request, the PBX calls the smartphone and the moment the smartphone answers, the PBX calls the destination number and connects both calls. A consequence of this technique is that the smartphone user has to wait for being called when he has selected whom to call. Not only gives this an undesirable time delay but it can also give awkward situations. For example: during the period the smartphone user waits on being called, he may be called by a third party. In this case the call from the PBX may end in the mobile phone voice mail of the user. Because the PBX notices the call is answered on the mobile phone, the PBX calls the destination number. Then the destination hears the voicemail of the user, if he picks up the phone.

In another alternative, calls may be made from mobile phone 110 through data network 152. Unfortunately, many data networks (Wifi, 4G, etc.) are not as robust for making mobile calls as the native phone capabilities of a mobile phone are (e.g., GSM or VoLTE). Furthermore, a mobile phone app stops instantly, when a native call (e.g., over GSM or Voice over LTE) comes in. This has the result that a phone call through a data network is suddenly interrupted by another call. Furthermore, if a cell phone is in a standby mode requiring unlocking to use it, you have to unlock the mobile phone to pick up a non-native call. If a native call comes in, the phone can be picked up without first unlocking the phone.

It is noted that the solution offered in communication system 100 is not tied to the particular carrier which provided the mobile phone telephone number. Mobile phone 100 may switch to a different carrier without losing the functionality offered by system 100.

Figure 3b schematically shows an example of an embodiment of a PBX. Figure 3b shows a PBX 320. PBX 320 may be any embodiment of PBX 120. PBX 320 connects calls to and from telephones 340 over a LAN 370 to external telephones 332. PBX 120 may use a gateway 352 to connect to a public switched telephone network (PSTN, 350), or connect to phones over the internet 360. For example, networks 350 or 360 may be used to connect PBX phone unit 125 and external phone 130.

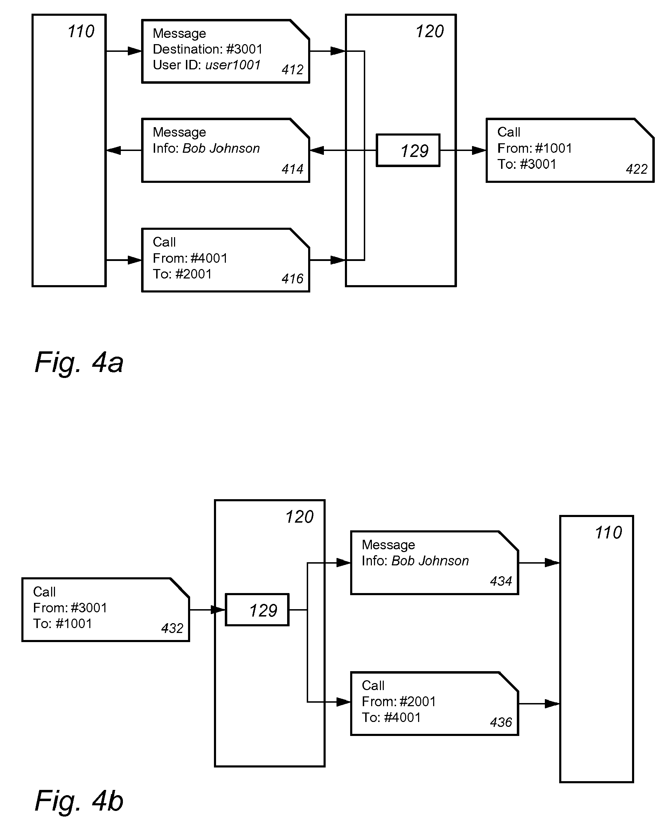

Figure 4a schematically shows an example of an embodiment of a communication system, e.g., communication system 100. Illustrated is an outgoing call is illustrated, i.e., a call made from the mobile phone 110.

Mobile control unit 119 sends a message 412 over data connection 114 to PBX 120. The message contains a destination number, say #3001, and is associated to a user identifier, e.g., by comprising the user identifier.

Mobile control unit 119 may receive message 414 from PBX control unit 129 with information associated with destination number #3001. Mobile phone 110 may use this information to changes address book 117 so that the dedicated telephone number #2001 corresponds to the name of the destination number. Mobile control unit 119 then causes phone unit 115 to call PBX 120 at dedicated telephone number #2001, in call 416; The Caller ID of the call is the mobile phone number of mobile phone 110.

Using user database 128, PBX 120 finds the message corresponding to the call incoming from cell phone number #4001. PBX 120 calls the destination number #3001 obtained from message 412, from phone number #1001. The result is that external phone receives a call from mobile phone 110 having as caller ID the phone number #1001.

Figure 4b schematically shows an example of an embodiment of a communication system. Illustrated is an incoming call, i.e., a call made to PBX 120.

A call 432 is made, e.g., from external phone 130 to a PBX number, e.g., #1001, that is currently routed to a mobile phone. For example, external phone 130 may call back after receiving the above call, by dialing the number in the caller id.

PBX 120 sends a message 434 to mobile control unit 119 over data connection 114 that there is an incoming call. Message 434 may comprise information associated with the number from which the call is received, e.g., taken from address book 127. Message 434 may also comprise the number #3001. Mobile control unit 119 uses the information in the message to change the contacting information for the dedicated telephone number #2001 to be the contact information contained in the message. Next, PBX 120 makes a call to phone unit 115 from the dedicated telephone number #2001. Phone unit 115 will recognize the call coming from #2001 and display the contact information from address book 117

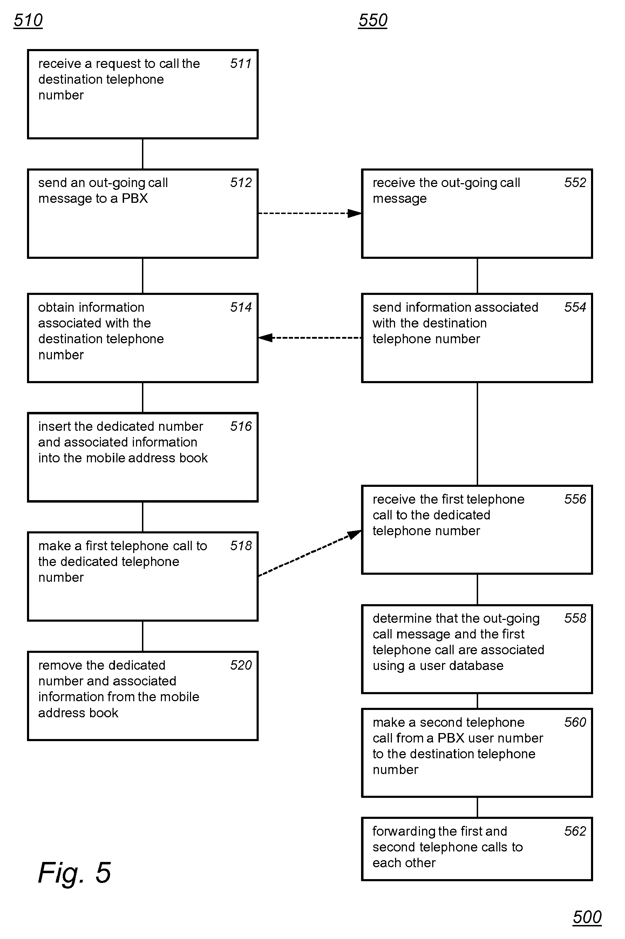

Figure 5 schematically shows an example of a communication method 500 for a private branch exchange 120 and a mobile phone 110. The communication method 500 comprises a mobile phone method 510 for use by, e.g., mobile phone 110 (shown on the left of figure 5) and a PBX method 550 for use by, e.g., PBX 120 (shown on the right of figure 5).

The flowchart is ordered according a possible time line, with time increasing from top to bottom. Points were the methods interact are symbolically indicated with dashed lines. Methods 510 and 550 may be executed by mobile control unit 119 and PBX control unit 129 respectively.

Method 510 comprises
- receiving 511, from a user of the mobile phone 110, a request to call the destination telephone number #3001,
- sending, through the mobile data unit 116, the out-going call message to the private branch exchange 120 over the data connection 114 between the mobile phone and the private branch exchange, the out-going call message being associated with the user identifier and comprising a representation of the destination telephone number,

Method 550 comprises
- receiving 552 through the PBX data unit 126, an out-going call message from the mobile phone 110 over a data connection 114 between the mobile phone 110 and the private branch exchange 120, the out-going call message being associated with the user identifier and comprising a representation of a destination telephone number #3001,
- sending 554 information associated with the destination telephone number, e.g., in response to receiving out-going call message, PBX 120 may

Method 510 comprises
- obtaining 514 information associated with the destination telephone number #3001 through the data network from a PBX address book 127 in the private branch exchange, the PBX address book 127 comprising telephone numbers and associated information. For example, the obtaining may receive the information from PBX 120, e.g., as a result of sending 554.
- inserting 516 the dedicated telephone number and associated information into the mobile address book, before making the first telephone call, so that the associated information for the dedicated telephone number is said obtained information.
- making 518 through the mobile phone unit, the first telephone call over the mobile telephone network 150 to the dedicated telephone number.

Method 550 comprises
- receiving 556 through the PBX phone unit, a first telephone call to the dedicated telephone number #2001 over a mobile telephone network 150 from the mobile telephone number #4001,
- determining 558 that the out-going call message from the mobile phone 110 and the first telephone call are associated by finding in the user database the user identifier and the mobile telephone number #4001 and obtaining from the database the associated PBX user number #1001,
- making 560 through the PBX phone unit, a second telephone call from the PBX user number #1001 to the destination telephone number #3001 and forwarding 562 the first and second telephone calls to each other, so that the destination telephone number #3001 receives the second telephone call having the PBX user number #1001 as caller-id,

Method 510 comprises
- removing 520 the dedicated telephone number and associated information from the mobile address book after the first call terminated. Optionally, call records of the first telephone records may be removed from mobile phone 110.

Several elements of methods 510 and 550 are optional. For example, one or more of elements 514, 516, 520, 554, may be omitted.

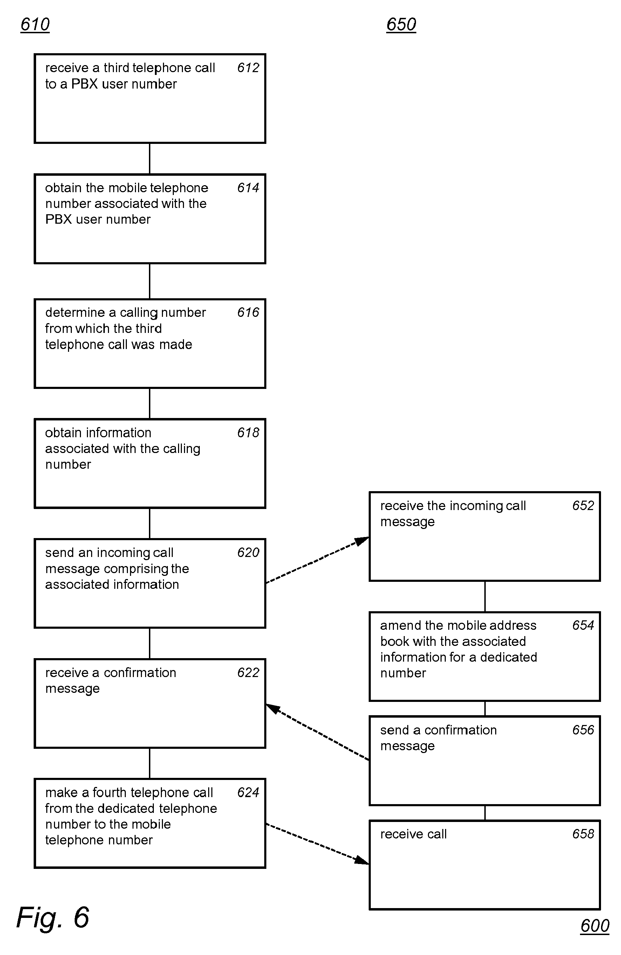

Figure 6 schematically shows an example of a communication method 600 for a private branch exchange 120 and a mobile phone 110. The communication method 600 comprises a mobile phone method 650 for use by, e.g., mobile phone 110 (shown on the right of figure 6) and a PBX method 610 for use by, e.g., PBX 120 (shown on the left of figure 6). The flowchart is ordered according a possible time line, with time increasing from top to bottom. Points were the methods interact are symbolically indicated with dashed lines. Methods 610 and 650 may be executed by mobile control unit 119 and PBX control unit 129 respectively

Method 610 comprises
- receiving 612, through the PBX phone unit, a third telephone call to the PBX user number#1001,
- obtaining 614, from the user database the mobile telephone number #4001 associated with the PBX user number #1001,
- determining 616 a calling number from which the third telephone call was made from a caller-id of the third telephone call,
- obtaining 618 information associated with the calling number from the PBX address book 127,
- sending 620, through the PBX data unit, an incoming call message to the mobile phone, the incoming call message comprising said obtained associated information,

Method 650 comprises
- receiving 652 through the mobile data unit 116, the incoming call message from the private branch exchange 120 over the data connection 114 between the mobile phone 110 and the private branch exchange 120,
- amending 654 the mobile address book 117, before receiving the fourth telephone call, so that the associated information for the dedicated telephone number is said obtained information.
- sending 656 the confirmation message, through the mobile data unit, after amending the mobile address book,

Method 610 comprises
- receiving 622 a confirmation message, through the PBX data unit, after sending the incoming call message to the mobile phone and before making the fourth telephone call,
- making 624 through the PBX phone unit, a fourth telephone call from the dedicated telephone number #2001 to the mobile telephone number #4001

Method 650 comprises
- receiving 658 the fourth telephone call, and displaying the obtained associated information for the dedicated telephone number. Optionally, mobile phone control unit 119 may remove from mobile phone 110 a call record of the fourth telephone call.

Also some elements of method 600 are optional, e.g., 656 and 622.

Many different ways of executing the methods 500, 510, 550, 600, 610 and 650 are possible, as will be apparent to a person skilled in the art. For example, the order of the steps can be varied or some steps may be executed in parallel. Moreover, in between steps other method steps may be inserted. The inserted steps may represent refinements of the method such as described herein, or may be unrelated to the method. For example, sending 512 may be executed after making 518, e.g., in a slow telephone network; likewise with 620 and 624. Starting the call before sending the message can improve the connection speed.

For example, steps 620 and 624 may be executed, at least partially, in parallel. Moreover, a given step may not have finished completely before a next step is started.

A method according to the invention may be executed using software, which comprises instructions for causing a processor system to perform methods 500, 510, 550, 600, 610 and 650. Software may only include those steps taken by a particular sub-entity of the system. The software may be stored in a suitable storage medium, such as a hard disk, a floppy, a memory etc. The software may be sent as a signal along a wire, or wireless, or using a data network, e.g., the Internet. The software may be made available for download and/or for remote usage on a server. A method according to the invention may be executed using a bitstream arranged to configure programmable logic, e.g., a field-programmable gate array (FPGA), to perform the method.

It will be appreciated that the invention also extends to computer programs, particularly computer programs on or in a carrier, adapted for putting the invention into practice. The program may be in the form of source code, object code, a code intermediate source and object code such as partially compiled form, or in any other form suitable for use in the implementation of the method according to the invention. An embodiment relating to a computer program product comprises computer executable instructions corresponding to each of the processing steps of at least one of the methods set forth. These instructions may be subdivided into subroutines and/or be stored in one or more files that may be linked statically or dynamically. Another embodiment relating to a computer program product comprises computer executable instructions corresponding to each of the means of at least one of the systems and/or products set forth.

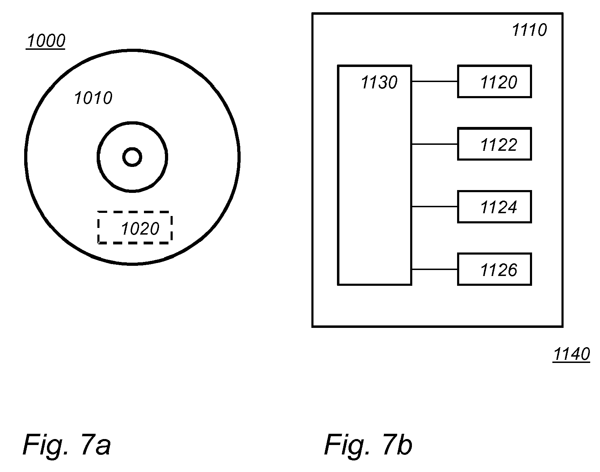

Figure 7a shows a computer readable medium 1000 having a writable part 1010 comprising a computer program 1020, the computer program 1020 comprising instructions for causing a processor system to perform a method according to an embodiment, e.g., mobile communication method, e.g., methods 510 and/or 650 or to perform a PBX communication method, e.g., methods 550 and/or 610.

The computer program 1020 may be embodied on the computer readable medium 1000 as physical marks or by means of magnetization of the computer readable medium 1000. However, any other suitable embodiment is conceivable as well. Furthermore, it will be appreciated that, although the computer readable medium 1000 is shown here as an optical disc, the computer readable medium 1000 may be any suitable computer readable medium, such as a hard disk, solid state memory, flash memory, etc., and may be non-recordable or recordable. The computer program 1020 comprises instructions for causing a processor system to perform a communication method according to an embodiment.

Figure 7b shows in a schematic representation of a processor system 1100 according to an embodiment. The processor system comprises one or more integrated circuits 1110. The architecture of the one or more integrated circuits 1110 is schematically shown in Figure 7b. Circuit 1110 comprises a processing unit 1120, e.g., a CPU, for running computer program components to execute a method according to an embodiment and/or implement its modules or units. Circuit 1110 comprises a memory 1122 for storing programming code, data, etc. Part of memory 1122 may be read-only. Circuit 1110 may comprise a communication element 1126, e.g., an antenna, connectors or both, and the like. Circuit 1110 may comprise a dedicated integrated circuit 1124 for performing part or all of the processing defined in the method. Processor 1120, memory 1122, dedicated IC 1124 and communication element 1126 may be connected to each other via an interconnect 1130, say a bus. The processor system 1110 may be arranged for contact and/or contact-less communication, using an antenna and/or connectors, respectively.

It should be noted that the above-mentioned embodiments illustrate rather than limit the invention, and that those skilled in the art will be able to design many alternative embodiments.

In the claims, any reference signs placed between parentheses shall not be construed as limiting the claim. Use of the verb "comprise" and its conjugations does not exclude the presence of elements or steps other than those stated in a claim. The article "a" or "an" preceding an element does not exclude the presence of a plurality of such elements. The invention may be implemented by means of hardware comprising several distinct elements, and by means of a suitably programmed computer. In the device claim enumerating several means, several of these means may be embodied by one and the same item of hardware. The mere fact that certain measures are recited in mutually different dependent claims does not indicate that a combination of these measures cannot be used to advantage.

In the claims references in parentheses refer to reference signs in drawings of embodiments or to formulas of embodiments, thus increasing the intelligibility of the claim. These references shall not be construed as limiting the claim.

## Claims

1. A communication system (100) comprising a private branch exchange (PBX, 120) and a mobile phone (110),
the private branch exchange (120) comprising,
- a PBX phone unit (125) arranged to make telephone calls from multiple PBX telephone numbers (#1001, #1002) and to receive telephone calls addressed to the multiple PBX telephone numbers, at least one of the multiple PBX telephone numbers being a dedicated telephone number (#2001),
- a PBX data unit (126) arranged to send and receive digital messages over a data network (152),
- a user database (128) associating with each other: a user identifier, a mobile telephone number (#4001) and a PBX user number (#1001) of the multiple PBX telephone numbers,
- a PBX control unit (129) arranged to
- receive, through the PBX data unit (126), an out-going call message from the mobile phone (110) over a data connection (114) between the mobile phone (110) and the private branch exchange (120), the out-going call message being associated with the user identifier and comprising a representation of a destination telephone number (#3001),
- receive, through the PBX phone unit, a first telephone call to the dedicated telephone number (#2001) over a mobile telephone network (150) from the mobile telephone number (#4001),
- determine that the out-going call message from the mobile phone (110) and the first telephone call are associated by finding in the user database the user identifier and the mobile telephone number (#4001) and obtaining from the user database the associated PBX user number (#1001),
- make, through the PBX phone unit, a second telephone call from the PBX user number (#1001) to the destination telephone number (#3001) and forwarding the first and second telephone calls to each other, so that the destination telephone number (#3001) receives the second telephone call having the PBX user number (#1001) as caller-id,
the mobile phone (110) comprising
- a mobile phone unit (115) arranged for a mobile telephone network (150), and arranged to make telephone calls from the mobile telephone number (#4001) and to receive telephone calls addressed to the mobile telephone number (#4001),
- a mobile data unit (116) arranged to send and receive digital messages over the data network (152),
- a mobile control unit (119) comprising the user identifier associated with a user of the mobile phone, and the dedicated telephone number of the private branch exchange, the mobile control unit being arranged to
- receive, from the user of the mobile phone (110), a request to call the destination telephone number (#3001),
- send, through the mobile data unit (116), the out-going call message to the private branch exchange (120) over the data connection (114) between the mobile phone and the private branch exchange, the out-going call message being associated with the user identifier and comprising a representation of the destination telephone number,
- make, through the mobile phone unit, the first telephone call over the mobile telephone network (150) to the dedicated telephone number.

2. A communication system as in Claim 1, wherein the mobile phone comprises
- a mobile address book (117) comprising telephone numbers and associated information, the mobile phone unit being arranged to display information associated with a telephone number in the mobile address book when making a call to said telephone number,
- the mobile control unit being arranged to
- obtain information associated with the destination telephone number (#3001)
- amend the mobile address book (117), before making the first telephone call, so that the associated information for the dedicated telephone number is said obtained information.

3. A communication system as in Claim 2, wherein
- the mobile control unit is arranged to
- insert the dedicated telephone number and associated information into the mobile address book before making the first telephone call,
- remove the dedicated telephone number and associated information from the mobile address book after the first call terminated.

4. A communication system as in any one of Claims 2 and 3, wherein the mobile control unit is arranged to obtain the information associated with the destination telephone number (#3001) through the data network from a PBX address book (127) in the private branch exchange, the PBX address book (127) comprising telephone numbers and associated information.

5. A communication system as in any one of the preceding claims, wherein
- the PBX control unit is arranged to
- determine a load on multiple dedicated telephone numbers of the multiple PBX telephone numbers,
- select a dedicated telephone number from multiple dedicated telephone numbers based on said determined load,
- send, through the PBX data unit, the selected dedicated telephone number, to the mobile phone over the data connection (114),
wherein the mobile control unit is configured to receive the dedicated telephone number from the private branch exchange through the mobile data unit before making the first telephone call.

6. A communication system as in any one of the preceding claims, wherein,
- the mobile data unit and the PBX data unit are arranged to establish an authenticated channel between the mobile phone and the private branch exchange over the data network (152),, so that digital messages sent from the mobile phone to the private branch exchange, through the mobile data unit, are associated with the user identifier.

7. A communication system as in any one of the preceding claims, wherein
the private branch exchange comprises
- a PBX address book (127) comprising telephone numbers and associated information,
- the PBX control unit being arranged to
- receive, through the PBX phone unit, a third telephone call to the PBX user number (#1001),
- obtain from the user database the mobile telephone number (#4001) associated with the PBX user number (#1001),
- determine a calling number from which the third telephone call was made from a caller-id of the third telephone call,
- obtain information associated with the calling number from the PBX address book (127),
- send, through the PBX data unit, an incoming call message to the mobile phone, the incoming call message comprising said obtained associated information,
- make, through the PBX phone unit, a fourth telephone call from the dedicated telephone number (#2001) to the mobile telephone number (#4001), and wherein
the mobile phone comprises
- a mobile address book (117) comprising telephone numbers and associated information, the mobile phone unit being arranged to display information associated with a telephone number in the mobile address book when making a call to said telephone number,
- the mobile control unit being arranged to
- receive, through the mobile data unit (116), the incoming call message from the private branch exchange (120) over the data connection (114) between the mobile phone (110) and the private branch exchange (120),
- amend the mobile address book (117), before receiving the fourth telephone call, so that the associated information for the dedicated telephone number is said obtained information.

8. A communication system as in Claim 7, wherein
- the PBX control unit is arranged to
- receive a confirmation message, through the PBX data unit, after sending the incoming call message to the mobile phone and before making the fourth telephone call,
and the mobile control unit is arranged to
- send the confirmation message, through the mobile data unit, after amending the mobile address book.

9. A communication system as in any one of the preceding claims, wherein
- the PBX control unit is arranged to determine the mobile phone cannot be reached and thereupon redirect the third telephone call to a redirection facility of the PBX.

10. A communication system as in any one of preceding claims, wherein
- the PBX control unit is arranged to log the duration of the first telephone call.

11. A private branch exchange (120) comprising,
- a PBX phone unit (125) arranged to make telephone calls from multiple PBX telephone numbers (#1001, #1002) and to receive telephone calls to the multiple PBX telephone numbers, at least one of the multiple PBX telephone numbers being a dedicated telephone number (#2001),
- a PBX data unit (126) arranged to send and receive digital messages over a data network (152),
- a user database (128) associating with each other: a user identifier, a mobile telephone number (#4001) and a PBX user number (#1001) of the multiple PBX telephone numbers,
- a PBX control unit (129) arranged to
- receive, through the PBX data unit (126), an out-going call message from a mobile phone (110) over a data connection (114) between the mobile phone (110) and the private branch exchange (120), the out-going call message being associated with the user identifier and comprising a representation of a destination telephone number (#3001),
- receive, through the PBX phone unit, a first telephone call to the dedicated telephone number (#2001) over a mobile telephone network (150) from the mobile telephone number (#4001),
- determine that the out-going call message from the mobile phone (110) and the first telephone call are associated by finding in the user database the user identifier and the mobile telephone number (#4001) and obtaining from the user database the associated PBX user number (#1001),
- make, through the PBX phone unit, a second telephone call from the PBX user number (#1001) to the destination telephone number (#3001) and forwarding the first and second telephone calls to each other, so that the destination telephone number (#3001) receives the second telephone call having the PBX user number (#1001) as caller-id.

12. A mobile phone (110) comprising
- a mobile phone unit (115) arranged for a mobile telephone network (150), and arranged to make telephone calls from a mobile telephone number (#4001) and to receive telephone calls to the mobile telephone number (#4001),
- a mobile data unit (116) arranged to send and receive digital messages over a data network (152),
- a mobile control unit (119) comprising a user identifier associated with a user of the mobile phone, and a dedicated telephone number of a private branch exchange, the mobile control unit being arranged to
- receive, from the user of the mobile phone (110), a request to call a destination telephone number (#3001),
- send, through the mobile data unit (116), an out-going call message to the private branch exchange (120) over a data connection (114) between the mobile phone and the private branch exchange, the out-going call message being associated with a user identifier and comprising a representation of the destination telephone number,
- make, through the mobile phone unit, a first telephone call over the mobile telephone network (150) to the dedicated telephone number.

13. A private branch exchange method, the method comprising,
- making telephone calls from multiple PBX telephone numbers (#1001, #1002) and receiving telephone calls to the multiple PBX telephone numbers, at least one of the multiple PBX telephone numbers being a dedicated telephone number (#2001),
- sending and receiving digital messages over a data network (152),
- receiving an out-going call message from a mobile phone (110) over a data connection (114) between the mobile phone (110) and the private branch exchange (120), the out-going call message being associated with a user identifier and comprising a representation of a destination telephone number (#3001),
- receiving a first telephone call to the dedicated telephone number (#2001) over a mobile telephone network (150) from a mobile telephone number (#4001),
- determining that the out-going call message from the mobile phone (110) and the first telephone call are associated by finding in a user database the user identifier and the mobile telephone number (#4001) and obtaining from the user database the associated PBX user number (#1001), the user database (128) associating with each other: the user identifier, the mobile telephone number (#4001) and a PBX user number (#1001) of the multiple PBX telephone numbers,
- making a second telephone call from the PBX user number (#1001) to the destination telephone number (#3001) and forwarding the first and second telephone calls to each other, so that the destination telephone number (#3001) receives the second telephone call having the PBX user number (#1001) as caller-id.

14. A mobile phone method, the mobile phone comprising
- making telephone calls from a mobile telephone number (#4001) and receiving telephone calls to the mobile telephone number (#4001),
- sending and receiving digital messages over a data network (152),
- receiving a request to call a destination telephone number (#3001),
- sending an out-going call message to a private branch exchange (120) over a data connection (114) between a mobile phone and the private branch exchange, the out-going call message being associated with a user identifier and comprising a representation of the destination telephone number, the user identifier being associated with a user of the mobile phone,
- making a first telephone call over the mobile telephone network (150) to the dedicated telephone number.

15. A computer program (1020) comprising computer program instructions arranged to perform the method of claim 13 or 14 when the computer program is run on a computer.

16. A computer readable medium (1000) comprising the computer program (1020) as in claim 14.
